Europäisches Patentamt

(19) European Patent Office

Office européen des brevets

(11) Publication number: **0 168 630**
**B1**

(12) **EUROPEAN PATENT SPECIFICATION**

(45) Date of publication of patent specification: **01.06.88**

(21) Application number: **85107206.6**

(22) Date of filing: **11.06.85**

(51) Int. Cl.⁴: **F 16 K 15/18**

(54) **Faucet valve with check stop.**

(30) Priority: **20.06.84 US 622701**

(43) Date of publication of application:
**22.01.86 Bulletin 86/04**

(45) Publication of the grant of the patent:
**01.06.88 Bulletin 88/22**

(84) Designated Contracting States:
**AT BE CH DE FR GB IT LI NL SE**

(56) References cited:
**FR-A- 730 977**
**GB-A-1 204 644**
**US-A-2 151 098**

(73) Proprietor: **STANADYNE INC.**
**100 Deerfield Road**
**Windsor Connecticut 06095 (US)**

(72) Inventor: **Schlotman, Walter F.**
**30207 Ashton Lane**
**Bay Village Ohio 44140 (US)**
Inventor: **Grella, Raymond M.**
**948 Rosewood Drive**
**Elyria, OH 44035 (US)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

The present invention relates to fluid valves and in particular to faucet valves of the type commonly found in the kitchen and lavatory. More specifically, the invention relates to a two-handle valve construction which includes a check valve within each faucet valve to prevent faucet valve to prevent backflow and crossflow between the hot and cold water supplies.

A prior art valve as known from US—A—2 151 098 comprises a rotatable valve flap which is mounted within the stem of the valve between the stem inlet and the stem outlet. The check valve in the form of the valve flap includes a spring coil mounted at the back face of the flap giving the flap an initial movement versus its closed position at the very moment of the fluid flow interruption. During normal operation of the valve, i.e. in case of fluid flow from the inlet to the outlet in the open position of the stem, the flap is urged by the fluid flow against the force exerted on the flap by the coil spring. Hence, the check valve of the prior art fluid valve is continuously located in the path of flow so that the seal is worn by particles contained in the fluid. In the closed position of the valve, the flap is at least partially rotated versus the closed position of the flap. When opening the fluid valve, the user expects the water to flow instantly.

At the prior art fluid valve, there is a time delay caused by the necessity of opening the check valve at the movement of opening the fluid valve by correspondingly rotating the stem.

In view of this prior art, it is the object of the present invention to provide a fluid valve having a check valve for preventing any undesired backflow having a long life of the check valve seal and avoiding any delay of the fluid flow after turning the stem of the fluid valve in the opened position.

This object is achieved by a fluid valve having the features of claim 1.

The invention is illustrated diagrammatically in the attached axial section through a valve of the type described.

The present invention is specifically directed to a check valve for use in a two-handle faucet valve of the type illustrated in US—A—4,395,018.

The valve disclosed herein will be used in a water faucet, for example in the kitchen or lavatory and may form either the hot or the cold water valve. In certain geographical areas there is a substantial pressure difference between the hot and cold water supplies and there is the possibility of crossflow through the faucet between the hot and cold water supplies if the unbalance in pressure therebetween becomes sufficiently large. The present invention provides a check valve carried by the valve stem and movable within a chamber defined by the valve stem, which check valve, with water flow being in the conventional direction will be unrestrictive to water flow through the valve. However, when there is crossflow between the hot and cold water supplies or backflow, which could be caused by such an unbalance in supply pressures, the check valve will automatically move to a position to close the stem inlet, thereby preventing water flow contary to the normal path of flow through the valve.

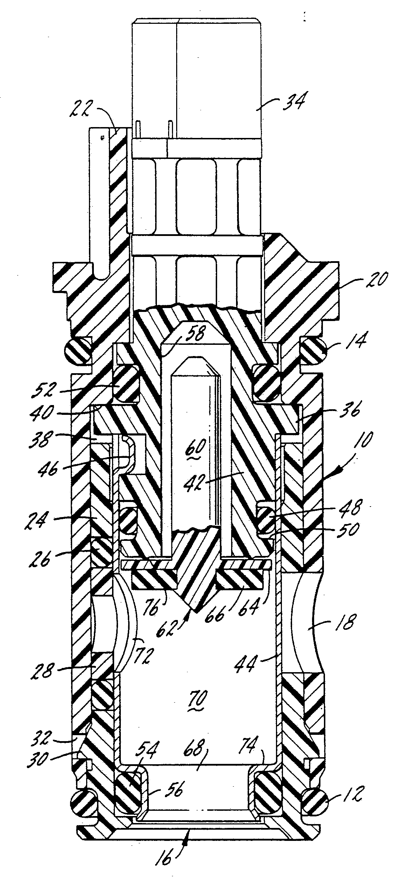

The valve shown herein will conventionally be placed within a faucet housing and only the sleeve and operating stem of the valve are shown in the drawing. The valve can be moved between open and closed positions to regulate the volume of water flow through it. The valve sleeve is indicated at 10 and is generally cylindrical in form and has seal rings 12 and 14 adjacent opposite ends thereof which will form a seal between the sleeve and the exterior faucet housing. The bottom of the sleeve has an inlet opening 16 and there is an outlet port 18 in the side thereof. Outwardly beyond seal ring 14 the sleeve has an outwardly extending shoulder 20 which will be used in properly positioning the valve cartridge formed of the sleeve and stem within the faucet housing. There is an axially extending projection 22 which cooperates which the stem and functions as a stop to limit stem rotation. Both the sleeve 10 and the stem which will be described hereinafter may be conveniently formed of a suitable plastic material providing a lightweight and yet durable valve.

Positioned directly inside of sleeve 10 is a seal support member 24 generally cylindrical in shape and mounting a valve closing seal 26 at a position generally diammetrically opposite to sleeve outlet port 18. A retainer 28, generally cylindrical in form may be positioned inside of the annular valve closing seal ring 28. The seal support extends axially beyond the end of the 10 and forms the sleeve inlet 16. The seal support may have a series of spaced outwardly extending projections or teeth 30 which will fit within a series of mating grooves 32 in the sleeve, thereby attaching the seal support to the sleeve.

Axially positioned within sleeve 10 and seal support 24 is a stem 34 which is rotatably mounted within the sleeve for opening and closing the valve. Stem 34 has an outwardly extending shoulder 36 which fits within a gap 38 formed between the outer end of seal support 24 and a shoulder 40 on sleeve 10. The combination of shoulder 36 and gap 38 cooperate to form an axial stop preventing reciprocal movement of the stem within the sleeve and limiting movement of the stem to rotary motion.

Stem 34 includes a body portion 42 and a hollow piston 44 attached thereto as at 46, which may be a form of a mechanical stake. A seal 48 is positioned within a groove 50 on body 42 and forms a seal between the body and the interior of piston 44. Stem 34 carries a further seal indicated at 52 which is effective between the exterior of the stem and the interior of the sleeve. Similarly, the inward or lower end of stem 34 carries a seal 54 circumferentially extending around a reduced portion 56 of piston 44. Seal 54 forms a seal between the exterior of the stem and the interior of the seal support adjacent sleeve inlet 16.

A bore 58 is formed within body portion 42 of stem 34 and has a generally elongated axial configuration to mount a rod 60 forming a part of a check valve indicated generally at 62. Rod 60 of the check valve is integral with a generally flat carrier 64 which mounts a seal ring 66.

The path of flow through the valve is from sleeve inlet 16 to stem inlet 68, then into a chamber 70 formed within piston 44 and then to stem outlet 72, which is shown in the closed position. When the stem is rotated 180 degrees, stem outlet 72 will be in register with the sleeve outlet 18, thus completing the path of flow through the valve. In normal operation, water flowing from the communicating stem and sleeve inlets through chamber 70 and then through the registered stem outlet 72 and sleeve outlet 18 will maintain check valve 62 in the unoperative position illustrated in the drawing. The pressure from the water flowing through the valve will keep the freely mounted check valve in the open position. When the valve is closed, the position shown in the drawing, the check valve will remain in the open position because the communicating sleeve and stem inlets will permit water to reach chamber 70 and thus the pressure of the water within the chamber will maintain the check valve in the open position.

In the event of water not flowing from the communicating stem and sleeve outlets to the communicating inlets, for example caused by a greater pressure at the outlet side than at the inlet side, such reverse flow will have the effect of moving the check valve downwardly, as illustrated in the drawing, whereby its seal ring 66 will close upon a shoulder 74 formed by the reduced end portion of piston 44. Thus, any backflow through the valve will be prevented by the check valve immediately moving to the closed position. Water pressure, when flow in the normal direction, maintains the check valve in an open position. When water flow is contrary to the normal path of flow, the check valve will move within chamber 70 toward a closed position. There is a circumferential bead or rim 76 at the end of body member 42 which spaces against the back side of carrier 64 from the stem body, permitting water to flow behind the carrier and thus assist in urging the carrier to a lower or closed position when flow is contrary to the normal direction.

As described in greater detail in the above-mentioned US—A—4,395,018, seal ring 26, the valve closing seal ring, is never within the path of flow through the valve. This is a highly advantageous arrangement in that the seal is not rubbed or chafed or worn during valve operation. The seal is not in the line or path of water flow and thus is not subject to being moved by water pressure nor does it come in contact with foreign matter in the water supply. The seal provides a positive closure for the valve, but does so in such a manner as to insure that the seal is not worn and has a long life.

The check valve is particularly advantageous and useful in a valve arrangement in which the valve closing seal is not within the path of flow because the chamber within the stem is always pressurized. Thus, the check valve is always in an open position and only can close in the event that there is reverse flow through the valve.

**Claims**

1. Fluid valve means including a sleeve (10) having an inlet (16) and an outlet (18), a stem (34) movable within said sleeve and having an inlet (68) and an outlet (72), a chamber (70) within said stem (34) connecting said stem inlet (68) and outlet (72), said stem outlet (72) being movable into communication with said sleeve outlet (18) to define a path of flow through said valve means from said communicating inlets (16, 68) through said stem outlet (72) and said sleeve outlet (18), and a check valve (62) movable within said stem chamber (70), characterized in that said stem inlet (68) is in constant communication with said sleeve inlet (16) whereby said stem chamber (70) is pressurized at all times, water from the communicating stem and sleeve inlets (68, 16) within said stem chamber (70) maintaining said check valve (62) in a position unrestrictive to the path of flow in both open and closed positions of said valve means, when water flows in a direction opposite to the path of flow, said check valve (62) closing the path of flow.

2. The valve means of claim 1 further characterized in that said check valve (62) closes said stem inlet (68) when water flows in a direction opposite to the path of flow.

3. The valve means of claim 1 further characterized in that said check valve (62) includes a seal member (66) carried thereon and positioned to close upon said stem inlet (68) when water flows in a direction opposite to the path of flow.

4. The valve means of claim 1 further characterized in that said check valve (62) includes a rod (60) extending within said stem (34) and a carrier (64) positioned within said chamber (70), said carrier (64) mounting a seal member (66) positioned to close upon said stem inlet (68) when water flow in a direction opposite to the path of flow.

5. The valve means of claim 4 further characterized in that said stem (34) includes a body (42) and a hollow piston (44) attached thereto, with said chamber (70) being defined within said hollow piston.

6. The valve means of claim 5 further characterized by and including a recess (58) within said body stem (42) for receiving said check valve rod (60).

7. The valve means of claim 5 further characterized by and including spacer means between said carrier (64) and stem body (42) positioning said carrier (64) away from an end of said stem body (42).

8. The valve means of claim 1 further characterized by and including a fixed seal member (26) carried by said sleeve (10) for closing flow between said sleeve inlet (16) and outlet (18), said seal member (26) being annular, at least in part, with the annulus being arranged about an axis perpendicular to the axis of said stem (34), said seal member (26) being spaced from said sleeve outlet (18) with said path of flow through said valve means (62) never being through said seal member (26) at any position of said stem (34), said stem outlet (72) being in register with and closed by said seal member (26) when said stem (34) is in a closed position.

## Patentansprüche

1. Flüssigkeitsventilvorrichtung mit einem Führungskörper (10), welcher einen Einlaß (16) und einen Auslaß (18) aufweist, einer innerhalb des Führungskörpers beweglichen und einen Einlaß (68) und einen Auslaß (72) aufweisenden Spindel (34), einer in der Spindel (34) angeordneten Kammer (70), welche den Spindeleinlaß (68) und -auslaß (72) verbindet, wobei der Spindelauslaß (72) zum Verbinden mit dem Führungskörperauslaß (18) bewegt werden kann, um einen Strömungsweg durch die Ventileinrichtung von den in Verbindung stehenden Einlässen (16, 68) durch den Spindelauslaß (72) und den Führungskörperauslaß (18) festzulegen, und mit einem in der Spindelkammer (70) bewegbaren Rückschlagventil (62), dadurch gekennzeichnet, daß der Spindeleinlaß (68) in ständiger Verbindung mit dem Führungskörpereinlaß (16) ist, wodurch die Spindelkammer (70) ständig unter Druck steht, Wasser von den in Verbindung stehenden Spindel- und Führungskörpereinlässen (68, 16) das Rückschlagventil (62) in der Spindelkammer (70) in einer den Strömungsweg in beiden geöffneten und geschlossenen Stellungen der Ventileinrichtung nicht beschränkenden Stellung hält, das Rückschlagventil (62) den Strömungsweg absperrt, wenn das Wasser in eine zum Strömungsweg umgekehrte Richtung strömt.

2. Ventileinrichtung nach Anspruch 1, dadurch gekennzeichnet, daß das Rückschlagventil (62) den Spindeleinlaß (68) verschließt, wenn Wasser in eine zum Strömungsweg umgekehrte Richtung strömt.

3. Ventileinrichtung nach Anspruch 1, dadurch gekennzeichnet, daß das Rückschlagventil (62) ein Dichtungsglied (66) umfaßt, das auf ersterem sitzt und dazu dient, den Spindeleinlaß (68) zu verschließen, wenn Wasser in einer zum Strömungsweg entgegengesetzten Richtung strömt.

4. Ventileinrichtung nach Anspruch 1, dadurch gekennzeichnet, daß das Rückschlagventil (62) einen innerhalb der Spindel (34) sich erstreckenden Rundstab (60) und einen innerhalb der Kammer (70) angeordneten Träger (64) umfaßt, der Träger (64) ein Dichtungsglied (66) aufnimmt, das dazu dient, den Spindeleinlaß (68) zu verschließen, wenn Wasser in einer zum Strömungsweg entgegengesetzten Richtung strömt.

5. Ventileinrichtung nach Anspruch 4, dadurch gekennzeichnet, daß die Spindel (34) einen Körper (42) und einen daran befestigten hohlen Kolben (44) mit einer Kammer (70) umfaßt, die innerhalb des hohlen Kolbens festgelegt ist.

6. Ventileinrichtung nach Anspruch 5, gekennzeichnet durch einen Rücksprung (58) innerhalb des Spindelkörpers (42) zur Aufnahme des Rückschlagventil-Rundstabs (60).

7. Ventileinrichtung nach Anspruch 5, gekennzeichnet durch eine Abstandseinrichtung zwischen dem Träger (64) und dem Spindelkörper (42), so daß der Träger (64) beabstandet von einem Ende des Spindelkörpers (42) angeordnet ist.

8. Ventileinrichtung nach Anspruch 1, gekennzeichnet durch ein von dem Führungskörper (10) zum Abdichten der Strömung zwischen dem Führungskörpereinlaß (16) und -auslaß (18) aufgenommenes, fest angebrachtes Dichtungsglied (26), das wenigstens teilweise ringförmig mit dem in einer Achse senkrecht zur Achse der Spindel (34) ausgebildet ist, das von dem Führungskörperauslaß (18) beabstandet ist, wobei der Strömungsweg durch die Ventileinrichtung (62) in keiner Stellung der Spindel (34) durch das Dichtungsglied (26) führt; den Spindelauslaß (72), der in Ausrichtung mit dem Dichtungsglied (26) steht und durch dieses verschlossen wird, sobald sich die Spindel (34) in einer Schließstellung befindet.

## Revendications

1. Boisseau de robinet pour liquide comprenant un fourreau (10) ayant une entrée (16) et une sortie (18), une tige (34) mobile à l'intérieur du fourreau et ayant une entrée (68) et une sortie (72), une chambre (70) à l'intérieur de la tige (34) raccordant l'entrée de tige (68) et la sortie de tige (72), la sortie de tige (72) pouvant être déplacée pour être amenée en communication avec la sortie de fourreau (18) afin de définir un trajet d'écoulement à travers le boisseau depuis les entrées communicantes (16, 68) à travers la sortie de tige (72) et la sortie de fourreau (18), et un clapet anti-retour (62) pouvant se déplacer à l'intérieur de la chambre de tige (70), caractérisé en ce que cette entrée de tige (68) communique constamment avec l'entrée de fourreau (16), d'où il résulte que la chambre de tige (70) est toujours sous pression, l'eau provenant des entrées communicantes de tige et de fourreau (68, 16) à l'intérieur de la chambre de tige (70) maintenant le clapet anti-retour (62) dans une position où il ne restreint pas le passage du courant à la fois dans les positions ouverte et fermée de ce boisseau, le clapet anti-retour (62) obturant ce passage lorsque l'eau circule dans une direction opposée au trajet normal de circulation.

2. Boisseau de robinet selon la revendication 1, caractérisé en ce que le clapet anti-retour (62) ferme l'entrée de tige (68) lorsque l'eau circule dans une direction opposée au trajet normal.

3. Boisseau de robinet selon la revendication 1, caractérisé en ce que le clapet anti-retour (62) comporte une élément d'étanchéité (66) porté sur lui et disposé pour fermer l'entrée de tige (68) lorsque l'eau circule dans une direction opposée à la direction normale.

4. Boisseau de robinet selon la revendication 1, caractérisé en ce que le clapet anti-retour (62) comporte une broche (60) s'étendant à l'intérieur de la tige (34) et un support (64) disposé à l'intérieur de la chambre (70), un élément d'étanchéité (66) étant monté sur le support (64) pour se fermer sur l'entrée de tige (68) lorsque l'eau circule dans une direction opposée à la direction normale.

5. Boisseau de robinet selon la revendication 4, caractérisé en ce que la tige (34) comporte un corps (42) et un piston creux (44) fixé sur le corps, la chambre (70) étant définie à l'intérieur du piston creux.

6. Boisseau de robinet selon la revendication 5, caractérisé en ce qu'il comporte un évidement (58) à l'intérieur du corps de tige (42) pour recevoir la broche (60) du clapet anti-retour.

7. Boisseau de robinet selon la revendication 5, caractérisé en ce qu'il comporte des moyens d'espacement entre le support (64) et le corps de tige (42) écartant le support (64) de l'extrémité de ce corps de tige.

8. Boisseau de robinet selon la revendication 1, caractérisé en ce qu'un élément d'étanchéité fixe (26) est porté par le fourreau (10) pour empêcher tout courant entre l'entrée de fourreau (16) et la sortie (18), cet élément d'étanchéité (26) étant annulaire, au moins partiellement, avec l'anneau disposé autour d'un axe perpendiculaire à l'axe de la tige (34), cet élément d'étanchéité (26) étant espacé de la sortie de fourreau (18), le trajet du courant traversant le boisseau ne se faisant jamais à travers l'élément d'étanchéité (26) pour toute position de la tige (34), la sortie de tige (72) étant en correspondance avec cet élément d'étanchéité (26) et étant fermée par lui lorsque la tige (34) est dans une position fermée.